# EUROPÄISCHE PATENTANMELDUNG

(11) **EP 1 031 940 A1**
(43) Veröffentlichungstag der Anmeldung: **30.08.2000**
(21) Anmeldenummer: 99103498.4
(22) Anmeldetag: 24.02.1999
(51) Int. Cl.: G06K 19/077

(54) **Anordnung enthaltend eine Vielzahl elektronischer Schaltungen**

(71) Anmelder: Sihl GmbH, 52355 Düren (DE)
(72) Erfinder: Yildirim, Seyhun, 52351 Düren (DE)
(74) Vertreter: Sternagel, Fleischer, Godemeyer & Partner Patentanwälte

(57) **Zusammenfassung**

Es wird eine Anordnung enthaltend eine Vielzahl elektronischer Schaltungen und Verwendung derselben vorgeschlagen, bei der auf einem elektrisch isolierenden Träger (1) eine Vielzahl von Transponderschaltungen (2) angeordnet ist, die jeweils eine Antennenanordnung (3) und weitere geeignete Schaltungselemente (4) umfassen, und die zur späteren Vereinzelung bestimmt oder geeignet sind, wobei die Antennenanordnung (3) wenigstens eine Leiterbahn (5) aus einem elektrisch leitenden Werkstoff umfaßt, und wobei die Leiterbahn (5) der Antennenanordnung (3) wenigstens einer Transponderschaltung (2) mit der Leiterbahn (5) der Antennenanordnung (3) wenigstens einer weiteren Transponderschaltung (2) leitend verbunden ist.

## Beschreibung

Die Erfindung betrifft eine Anordnung enthaltend eine Vielzahl elektronischer Schaltungen und deren Verwendung.

Beispiele für solche elektronischen Schaltungen sind sogenannte RFID-Transponder. Solche Transponder sind beschrieben in US 4,475,481, US 4,730,188 oder US 4,857,893. Das in US 4,475,481 beschriebene Identifikationssystem verwendet solche grundsätzlich bekannten und kommerziell erhältlichen Transponder. Sie enthalten eine induktive Antennenspule zur elektromagnetischen Ein- und Auskopplung von Signalen zur Übertragung von Daten zwischen z.B. einem Warensicherungsetikett und einer Überwachungsanlage.

Oft ist es dabei zweckmäßig, einen Transponder zu verwenden, der auf einem dünnen flexiblen Träger befestigt ist, auf dem die mit einem Chip, der die eigentliche Auswerteschaltung enthält, elektrisch verbundene Antenne ausgebildet ist. Diese Antenne kann eine auf dem Träger gebildete leitfähige Spule aufweisen und über elektrische Antennenanschlußpads mit dem Chip in bekannter Weise verbunden sein. Die Antennenleiter sind dabei auf dem flexiblen Träger, der z.B. aus jedem für die Herstellung von flexiblen Leiterplatten bekannten folienartigem Material bestehen kann, mit den zur Herstellung von Leiterbahnen auf flexiblen Leiterplatten bekannten Verfahren gebildet. Aus EP 0 595 549 B1 ist beispielsweise bekannt, eine solche Antenne auf einer elektrisch nichtleitenden Polyesterfolie auszubilden.

Die vorzugsweise auf einem flexiblen Träger befestigten RFID-Transponder mit elektrisch angeschlossener Antenne können an unterschiedlichen Stellen eines Etiketts, Anhängers oder des Zutrittskontrollscheines angeordnet sein, um voneinander trennbare Einheiten in einer Laminatbahn auszubilden. Der Transponder kann in die selbstklebend ausgerüstete Rückseite des Etiketts oder Anhängers integriert sein und ist dann von der Trägerschicht der Laminatbahn als Linerschicht abgedeckt. Ein solcher Anhänger ist beispielsweise aus EP 0 595 549 B1 bekannt.

Solche Erzeugnisse werden in der Regel in großen Mengen und mit entsprechend angepaßten Herstellverfahren produziert. Dazu gehört, daß solche Etiketten etc., in die eine genannte Transponderschaltung integriert ist, endlos oder in einem vergleichbaren Verfahren getaktet hergestellt werden.

Dabei werden die Transponderschaltungen zu einer Vielzahl auf Bahnen zusammengefaßt und beispielsweise in Rollenform oder Formaten an den Weiterverarbeiter geliefert. Eine solche Ausbildung des Halbzeugs ist beispielsweise in WO 96/10803 und EP 0 784 829 B1 beschrieben. Dabei kann die Folie mit der darauf befindlichen Antenne und dem Chip beispielsweise mit entsprechenden Papierbahnen zu einem selbstklebenden Etikettenband zusammenlaminiert werden, das dann in einzelne Etiketten so aufgeteilt wird, daß jedes Etikett eine Transponderschaltung enthält. Ein solches Vereinzeln der Etiketten kann zum Beispiel durch Stanzen erfolgen.

Aufgrund der hohen Verarbeitungsgeschwindigkeiten kommt es erwartungsgemäß zu elektrostatischer Aufladung der dielektrischen Trägerfolie, insbesondere beim Abwickeln von einer Rolle und an Umlenkrollen von Verarbeitungsmaschinen. Da die Chips, also die eigentlich aktiven Halbleiterbauelemente der Schaltung, innerhalb der Schaltung und insbesondere innerhalb der Antennenspulen angeordnet sind und die Schaltung in sich geschlossen ist, ist ein zerstörtend auf die Halbleiterbauelemente einwirkender Potentialunterschied innerhalb der Schaltung kaum zu erwarten. Dies gilt auch in gewisser Weise gegenüber der Umgebung, da die Antennenspule in der Regel eine verhältnismäßig große metallisch leitende Fläche aufweist. Dennoch kommt es bei höheren Aufladungen vor, daß Transponderschaltungen während der Herstellung von Rollenbahnen, Blattformaten oder des Endproduktes zerstört werden.

Zur Beseitigung solcher und anderer bei der Verarbeitung der Transponderschaltungen auf dem Folienträger auftretender Störungen durch elektrostatische Aufladung ist es ferner bekannt, an den Produktionsanlagen Vorrichtungen zum Anblasen des Folienbandes mit ionisierter Luft und Kämme mit elektrisch leitenden Fasern vorzusehen. Solche Einrichtungen bringen allerdings einen erheblichen zusätzlichen apparativen und Wartungsaufwand mit sich.

Der Erfindung liegt daher die Aufgabe zugrunde, das Risiko von Beschädigungen der Transponderschaltungen durch elektrostatische Aufladung bei der Verarbeitung mit geringem Aufwand zu verringern.

Die Aufgabe wird erfindungsgemäß gelöst durch eine Anordnung mit einer Vielzahl elektronischer Schaltungen, bei der auf einem elektrisch isolierenden Träger eine Vielzahl von Transponderschaltungen angeordnet ist, die jeweils eine Antennenanordnung und weitere geeignete Schaltungselemente umfassen, und die zur späteren Vereinzelung bestimmt oder geeignet sind, wobei die Antennenanordnung wenigstens eine Leiterbahn aus einem elektrisch leitenden Werkstoff umfaßt, und wobei die Leiterbahn der Antennenanordnung einer Transponderschaltung mit der Leiterbahn der Antennenanordnung wenigstens einer weiteren Transponderschaltung leitend verbunden ist.

Durch die erfindungsgemäße Ausbildung einer Anordnung ist es völlig ohne externen apparativen Aufwand möglich, einen Potentialausgleich zwischen verbundenen Transponderschaltungen herzustellen. Dies kann praktisch ohne Mehrkosten bei der Ausbildung der Antennenanordnung mit erfolgen. Auch ein zusätzlicher Aufwand bei der Verarbeitung solcher Anordnungen ist damit nicht verbunden, da die Leiterbahnen in üblicher Stärke ohne weiteres bei der Vereinzelung der Etiketten o.ä. mit durchtrennt werden können, z.B. beim Stanzen. Nennenswerte Beeinträchtigungen der Antenneneigenschaften ergeben sich in den gebräuchlichen Frequenzbereichen nicht.

Besonders vorteilhaft ist es, wenn wenigstens eine Leiterbahn jeder Antennenanordnung aller Transponderschaltungen auf der Anordnung mit wenigstens einer Leiterbahn einer anderen Antennenanordnung leitend verbunden ist.

Bei einer Ausbildung derart, daß durch die leitende Verbindung der Leiterbahnen der Antennenanordnungen der Transponderschaltungen keine leitend geschlossene Schleife entsteht, können die Transponderschaltungen auch noch während der Verarbeitung der Anordnung durch geeignete Prüfeinrichtungen berührungslos getestet werden, ohne daß es durch die galvanische Verbindung benachbarter Antennen zu Fehlern kommt.

Für eine großtechnische Fertigung, bei der Anordnungen mit mehreren Transponderschaltungen nicht nur hintereinander, z.B. in Rollenform, sondern auch nebeneinander, z.B. in Formaten, verarbeitet werden sollen, ist es zweckmäßig, wenn bei einer zweidimensionalen Anordnung der Transponderschaltungen auf der Anordnung die leitende Verbindung der Leiterbahnen der Antennenanordnungen der Transponderschaltungen untereinander in der Weise erfolgt, daß sich über die Länge der Anordnung eine mäanderförmige Verbindung der Transponderschaltungen untereinander ergibt.

Alternativ kann es auch vorteilhaft sein, wenn bei einer zweidimensionalen Anordnung der Transponderschaltungen auf der Anordnung die leitende Verbindung der Leiterbahnen der Antennenanordnungen der Transponderschaltungen untereinander in der Weise erfolgt, daß sich über die Länge der Anordnung eine Verbindung der Transponderschaltungen untereinander in einer Baumstruktur ergibt.

Mit besonders geringem Aufwand läßt sich das Potential der Transponderschaltungen erden, wenn an wenigstens einem Ende der Anordnung eine elektrisch leitende Anschlußfläche ausgebildet ist, die mit der Leiterbahn wenigstens einer Antennenanordnung der Transponderschaltungen leitend verbunden ist.

Letzteres läßt sich besonders einfach handhaben bei einem Set aus einer Aufbewahrungs- und Transporttrommel und einer Anordnung nach Anspruch 6, wobei die wenigstens eine Anschlußfläche mit einer Achse der Trommel leitend verbunden ist.

Besonders vielfältige Anwendungsmöglichkeiten z.B. als selbstklebende Identifikationsetiketten ergeben sich, wenn die Anordnung wenigstens einseitig mit einem Kleber zur selbstklebenden Befestigung beschichtet ist.

Besonders vorteilhaft läßt sich eine Anordnung nach einem der vorhergehenden Ansprüche zum Einbetten elektronischer Schaltungen in Chipkarten, Etiketten, Eintritts- und Fahrkarten, Gepäckanhängern, Warensicherungsetiketten und ähnlichen Identifikationssystemen verwenden oder auch zur Herstellung von Einstecketiketten, z.B. durch Vereinzeln der elektronischen Schaltungen.

Die Erfindung soll im folgenden anhand von in den Zeichnungen dargestellten Ausführungsbeispielen näher erläutert werden. Es zeigen:
- Fig. 1: eine erfindungsgemäße Anordnung mit eindimensional angeordneten Transponderschaltungen;
- Fig. 2: eine erfindungsgemäße Anordnung mit zweidimensional angeordneten Transponderschaltungen; und
- Fig. 3: eine zu der Ausführungsform in Fig. 2 alternative Ausführungsform einer erfindungsgemäßen Anordnung.

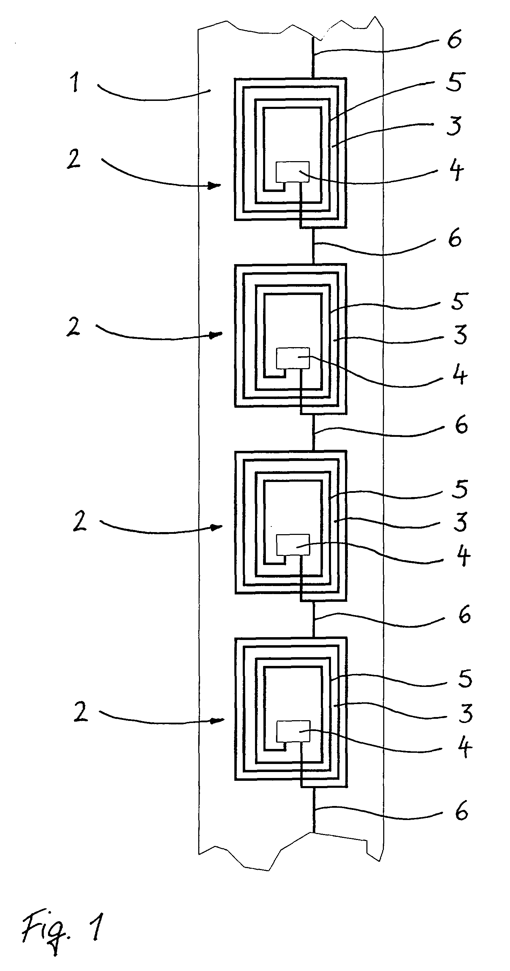

In den Figuren und insbesondere in Fig. 1 ist eine Anordnung enthaltend eine Vielzahl elektronischer Schaltungen beispielsweise zum Einbetten elektronischer Schaltungen in Chipkarten, Etiketten, Eintritts- und Fahrkarten, Gepäckanhängern, Warensicherungsetiketten und ähnlichen Identifikationssystemen dargestellt, bei der auf einem elektrisch isolierenden Träger 1, z.B. eine aus der Herstellung von flexiblen Leiterplatten bekannte Polyesterfolie, eine Vielzahl von Transponderschaltungen 2 angeordnet ist. Jede Transponderschaltung 2 umfaßt eine Antennenanordnung 3 und weitere geeignete Schaltungselemente 4 zweckmäßig in Form eines Halbleiterchips. Die Antennenanordnung 3 umfaßt wenigstens eine Leiterbahn 5 aus einem elektrisch leitenden Werkstoff, wie er aus der Elektronik bekannt ist, z.B. aus einer 20 µm dicken Kupferschicht.

Erfindungsgemäß ist die Leiterbahn 5 der Antennenanordnung 3 der Transponderschaltung 2 mit der Leiterbahn 5 der Antennenanordnung 3 einer weiteren Transponderschaltung 2 durch eine Brücke 6 leitend verbunden. Vorteilhaft sind die Leiterbahnen 5 der Antennenanordnungen 3 aller Transponderschaltungen 2 auf der Anordnung durch solche Brücken 6 miteinander leitend verbunden.

Dabei entsteht durch die leitende Verbindung der Leiterbahnen 5 der Antennenanordnungen 3 der Transponderschaltungen 2 keine leitend geschlossene Schleife, so daß die Transponderschaltungen 2 auch noch während der Verarbeitung der Anordnung durch geeignete Prüfeinrichtungen berührungslos getestet werden können, ohne daß es durch die galvanische Verbindung benachbarter Antennen 3 zu Fehlern kommt.

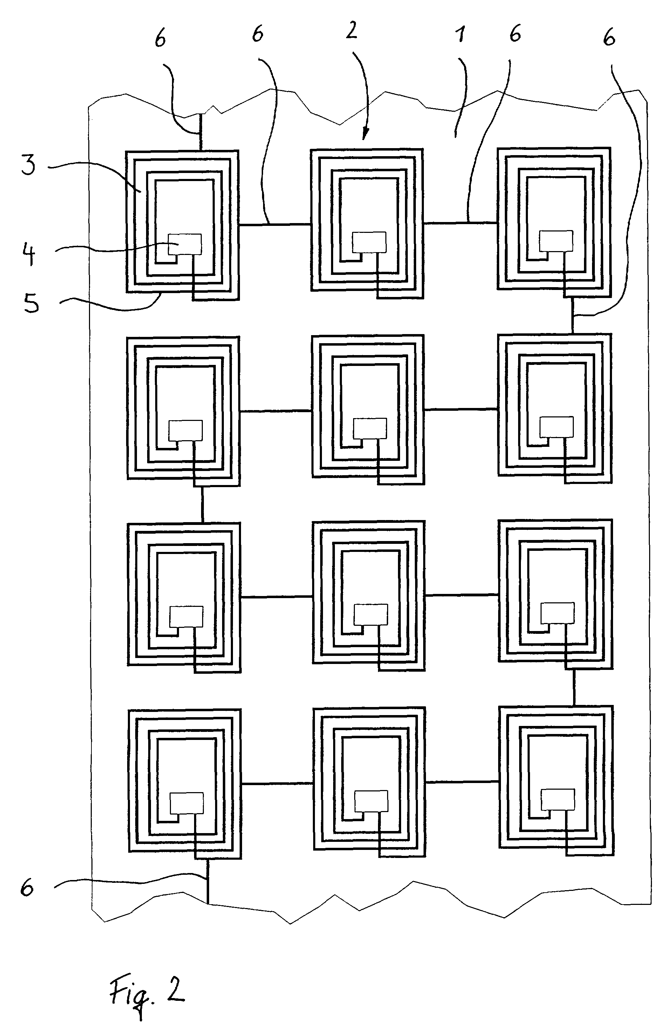

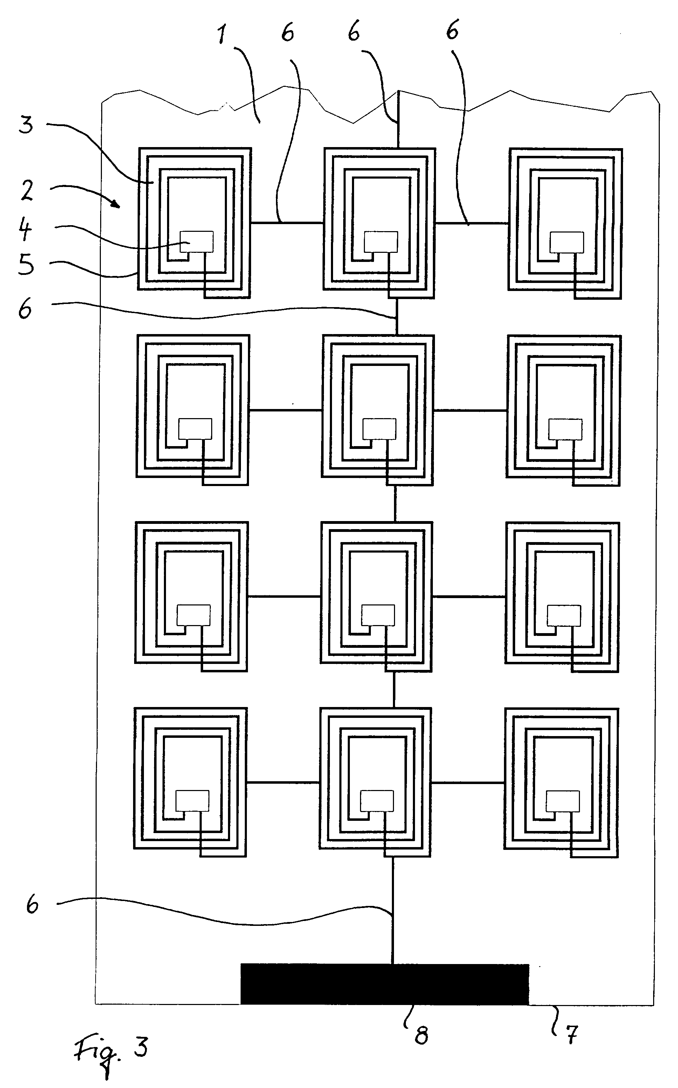

In den Figuren 2 und 3 sind Anordnungen mit mehreren Transponderschaltungen 2 nicht nur hintereinander, sondern auch nebeneinander angeordnet gezeigt. Bei einer solchen zweidimensionalen Anordnung der Transponderschaltungen 2 auf der Anordnung erfolgt die leitende Verbindung der Leiterbahnen 5 der Antennenanordnungen 3 der Transponderschaltungen 2 untereinander durch Brücken 6 in der Weise, daß sich über die Länge der Anordnung eine mäanderförmige Verbindung der Transponderschaltungen 2 untereinander ergibt.

Wie in Figur 3 gezeigt, kann auch die Verbindung der Leiterbahnen 5 der Antennenanordnungen 3 der Transponderschaltungen 2 über Brücken 6 untereinander in der Weise erfolgen, daß sich über die Länge der Anordnung eine Verbindung der Transponderschaltungen 2 untereinander in einer Baumstruktur ergibt. Vorteilhaft ist an einem Ende 7 der Anordnung eine elektrisch leitende Anschlußfläche 8 ausgebildet, die über eine Brücke 6 mit den Leiterbahnen 5 der anderen Antennenanordnungen 3 der Transponderschaltungen 2 leitend verbunden ist. Dadurch läßt sich das Potential der Transponderschaltungen 2 gegenüber der Umgebung ohne großen Aufwand steuern.

Besonders praktisch ist es eine Aufbewahrungs- und Transporttrommel mit einer erfindungsgemäßen Anordnung mit einer Anschlußfläche 8 zu kombinieren, wobei die Anschlußfläche 8 dann zweckmäßig mit einer Achse der Trommel leitend verbunden ist und so das Potential der Transponderschaltungen 2 leicht geerdet gehalten werden kann.

## Patentansprüche

1. Anordnung enthaltend eine Vielzahl elektronischer Schaltungen, bei der auf einem elektrisch isolierenden Träger (1) eine Vielzahl von Transponderschaltungen (2) angeordnet ist, die jeweils eine Antennenanordnung (3) und weitere geeignete Schaltungselemente (4) umfassen, und die zur späteren Vereinzelung bestimmt oder geeignet sind, wobei die Antennenanordnung (3) wenigstens eine Leiterbahn (5) aus einem elektrisch leitenden Werkstoff umfaßt, und wobei die Leiterbahn (5) der Antennenanordnung (3) wenigstens einer Transponderschaltung (2) mit der Leiterbahn (5) der Antennenanordnung (3) wenigstens einer weiteren Transponderschaltung (2) leitend verbunden ist.

2. Anordnung nach Anspruch 1,
dadurch gekennzeichnet, daß
wenigstens eine Leiterbahn (5) jeder Antennenanordnung (3) aller Transponderschaltungen (2) auf der Anordnung mit wenigstens einer Leiterbahn (5) einer anderen Antennenanordnung (3) leitend verbunden ist.

3. Anordnung nach einem der vorhergehenden Ansprüche,
dadurch gekennzeichnet, daß
durch die leitende Verbindung der Leiterbahnen (5) der Antennenanordnungen (3) der Transponderschaltungen (2) keine leitend geschlossene Schleife entsteht.

4. Anordnung nach einem der vorhergehenden Ansprüche,
dadurch gekennzeichnet, daß
bei einer zweidimensionalen Anordnung der Transponderschaltungen (2) auf der Anordnung die leitende Verbindung der Leiterbahnen (5) der Antennenanordnungen (3) der Transponderschaltungen (2) untereinander in der Weise erfolgt, daß sich über die Länge der Anordnung eine mäanderförmige Verbindung der Transponderschaltungen (2) untereinander ergibt.

5. Anordnung nach einem der Ansprüche 1 bis 3,
dadurch gekennzeichnet, daß
bei einer zweidimensionalen Anordnung der Transponderschaltungen (2) auf der Anordnung die leitende Verbindung der Leiterbahnen (5) der Antennenanordnungen (3) der Transponderschaltungen (2) untereinander in der Weise erfolgt, daß sich über die Länge der Anordnung eine Verbindung der Transponderschaltungen (2) untereinander in einer Baumstruktur ergibt.

6. Anordnung nach einem der vorhergehenden Ansprüche,
dadurch gekennzeichnet, daß
an wenigstens einem Ende (7) der Anordnung eine elektrisch leitende Anschlußfläche (8) ausgebildet ist, die mit der Leiterbahn (5) wenigstens einer Antennenanordnung (3) der Transponderschaltungen (2) leitend verbunden ist.

7. Anordnung nach einem der vorhergehenden Ansprüche,
dadurch gekennzeichnet, daß
die Anordnung wenigstens einseitig mit einem Kleber zur selbstklebenden Befestigung beschichtet ist.

8. Set aus einer Aufbewahrungs- und Transporttrommel und einer Anordnung nach Anspruch 6, wobei die wenigstens eine Anschlußfläche (8) mit einer Achse der Trommel leitend verbunden ist.

9. Verwendung einer Anordnung nach einem der vorhergehenden Ansprüche zum Einbetten elektronischer Schaltungen in Chipkarten, Etiketten, Eintritts- und Fahrkarten, Gepäckanhängern, Warensicherungsetiketten und ähnlichen Identifikationssystemen.

10. Verwendung einer Anordnung nach einem Ansprüche 1 bis 8 zur Herstellung von Einstecketiketten.
